# NOUVEAU FASCICULE DE BREVET EUROPEEN

(11) **EP 0 933 191 B2**
(45) Date de publication et mention de la décision concernant l'opposition: **02.09.2009**
(45) Mention de la délivrance du brevet: 10.07.2002
(21) Numéro de dépôt: 99420026.9
(22) Date de dépôt: 29.01.1999
(51) Int. Cl.: B29C 70/10, B29B 15/08, B29K 101/12, B29K 311/10, B29L 31/30

(54) **Article à base de fibres végétales utile pour la fabrication de pièces de véhicules routiers**
Gegenstand aus pflanzlichen Fasern geeignet zur Herstellung von Fahrzeugteilen
Article based on vegetable fibers, suitable for the manufacture of vehicle parts

(30) Priorité: 29.01.1998 FR 9801249
(43) Date de publication de la demande: 04.08.1999
(73) Titulaire: VISTEON SYSTEMES INTERIEURS S.A.S., 92927 La Défense Cédex (FR)
(72) Inventeur: Dutouquet, Denis, 62410 Meurchin (FR); Asselin, François Gérard Robert Raymond, 76640 Envronville (FR)
(74) Mandataire: Nuss, Pierre

(56) Documents cités:
- EP-A- 0 589 193
- EP-A- 0 596 379
- EP-A- 0 647 519
- EP-A- 0 744 261
- DE-A- 2 845 117
- DE-A- 3 614 533
- DE-A- 4 207 243
- DE-A- 4 311 592
- DE-A- 19 543 165
- DE-B- 1 283 541
- FR-A- 1 313 921
- GB-A- 198 910
- US-A- 2 725 289
- US-A- 4 617 383
- US-A- 5 232 779
- D.EISELE: 'Faserhaltige Bauteile für die Automibilausstattung zur Leistungsfähigkeit von Naturfasern', vol. 1/2, 1994, TEXTIL PRAXIS INT., LEINFELDEN-ECHTERDINGEN page 68-76
- LEXIKON DER TECHNIK LUEGER: 'Werkstoffe und Werkstoffprüfung', vol. 3, 1961, DEUTSCHE VERLAG, SUTTGART article A. EHRHARDT - H. FRANKE, pages 49-51 - 235-236
- ERICH GRUBER: 'Unterlagen zur Vorlesung' MAKROMOLEKULARE CHEMIE, ÖKOLOGIE UND ÖKONOMIE DER NACHWACHSEND 23 Février 2000, TU DARMSTADT,

## Description

L'invention concerne un article, à base de matière thermoplastique, et de fibres naturelles d'origine végétale (ci-après dénommées "fibres végétales"), utile notamment pour la fabrication de pièces intérieures et extérieures de véhicules routiers, tels que des panneaux de porte, des planches de bord, des garnitures de plafonniers, des tablettes, des encadrements de fenêtre, des pièces extérieures sous capot, etc.

Dans l'industrie automobile, des articles à base de fibres thermoplastiques et de fibres végétales sont déjà utilisés. D'une manière générale, ces articles sont obtenus par moulage sous pression de mats fibreux préalablement chauffés et sont éventuellement associés à une ou plusieurs couches d'un autre matériau.

Mais ces articles connus présentent plusieurs défauts :
- ils peuvent produire des gaz odorants, résultant probablement, d'une part des températures élevées auxquelles les fibres végétales sont soumises lors de l'opération de chauffage des mats fibreux, et d'autre part de la température et de l'ambiance (lumière, chaleur, hygrométrie) dans le véhicule où l'article est utilisé. Ainsi, il a été constaté que des émanations odorantes se poursuivent et persistent tout au long de la vie de l'article, dans l'espace intérieur du véhicule ;
- ils peuvent produire des composés organiques volatils, plus ou moins gras, qui peuvent se déposer sur les vitres du véhicule pour former un voile gênant la visibilité du conducteur (ce phénomène est connu sous le vocable anglais de "fogging") ;
- ils peuvent se dégrader progressivement en présence d'humidité, par suite du développement de moisissures. Les fibres végétales sont en effet facilement putrescibles quand elles sont mises en présence d'humidité et de l'oxygène de l'air. La dégradation des fibres végétales peut aller jusqu'à des nuisances d'odeurs et d'aspect ainsi qu'à une diminution notable des résistances mécaniques des articles connus.

Pour surmonter ces problèmes, il a été proposé, dans la demande de brevet européen n°0671259, un panneau composite multicouches dans lequel l'élément support comprend trois couches : une couche centrale et deux couches extérieures, toutes trois à base d'une matière synthétique thermoplastique et, selon le cas, de fibres végétales.

Afin d'isoler les fibres végétales de l'oxygène de l'air et de l'humidité, le rapport en poids de matière synthétique thermoplastique sur les fibres végétales est prévu élevé dans les deux couches extérieures, tandis que ce rapport est variable dans la couche centrale, de sorte que les couches extérieures comprennent une quantité moins importante de fibres végétales que celle prévue dans la couche centrale. Selon une variante, les fibres végétales peuvent être absentes des deux couches extérieures.

Néanmoins, cet article à trois couches n'est pas satisfaisant car lors de certaines opérations de fabrication de pièces intérieures d'automobile, tel que le poinçonnage et la découpe, on élimine partiellement les couches extérieures protectrices. Dès lors, l'humidité et l'oxygène de l'air peuvent atteindre la couche centrale fortement chargée en fibres végétales et conduire à leur dégradation. De plus, cette ouverture sur l'extérieur offre la possibilité aux gaz émis par les fibres végétales de s'échapper et d'occasionner des odeurs et/ou des dépôts gras sur les vitres (fogging).

On a maintenant trouvé un article monocouche, à base de matière synthétique thermoplastique et de fibres végétales, servant à la fabrication de pièces de véhicules routiers, qui est à la fois suffisamment léger, résistant, et peu sensible à l'humidité et à l'oxygène de l'air, même dans le cas d'opérations de découpe et/ou de poinçonnage, et qui produit nettement moins de composés organiques volatils, odorants et/ou gras.

Plus précisément, la présente invention a pour objet un article selon la revendication 1 et un procédé de fabrication selon la revendication 1.

Selon l'invention, l'article monocouche présente en outre les caractéristiques techniques suivantes :
- la matière synthétique thermoplastique est sous la forme de fibres synthétiques thermoplastiques ;
- les fibres végétales traitées et les fibres synthétiques thermoplastiques sont mélangées et réparties de façon sensiblement uniforme.

Conformément à la présente invention, l'article monocouche peut avoir superficiellement un aspect particulier, par exemple lisse ou grenelé (l'aspect de surface grenelé peut être obtenu lors du moulage à froid et sous pression).

Telles qu'elles sont utilisées ici, les expressions :
- "article" désigne un article monocouche, préparé par thermofaçonnage. Cet article conserve sa forme dans des conditions normales de pose et d'utilisation. Son grammage est de préférence compris entre 200 et 3500 g/m². Dans le cas de l'application en tant que panneau de porte, son grammage est alors de l'ordre de 1600 g/m² ou supérieur ;
- "composés chimiques indésirables associés aux fibres végétales" désigne essentiellement des composés chimiques qui subsistent dans les fibres végétales, après les opérations de traitements naturels, biochimiques et physiques de rouissage, de broyage, de teillage (et le cas échéant de peignage) et qui peuvent produire des composés organiques volatils odorants et/ou gras (fogging). Ces composés chimiques indésirables sont essentiellement constitués de pectine et autres substances grasses. Des exemples de composés organiques volatils résultant de ces composés organiques indésirables sont donnés dans les exemples (se reporter aux résultats de l'analyse par chromatographie en phase gazeuse couplée à une spectrométrie de masse) ;
- "fibres végétales traitées" désigne les fibres végétales plus ou moins purifiées, qui ont subi :
   ■ des traitements visant à éliminer une grande partie, voire la totalité, de la lignine (ou particules de bois) associée aux fibres végétales cellulosiques. On utilise généralement des traitements naturels, biochimiques et physiques de rouissage, de broyage, de teillage et, le cas échéant, de peignage,
   ■ suivies par un traitement visant à éliminer une grande partie des composés chimiques indésirables précités. De préférence, le traitement est chimique et réalisé selon les modes de réalisation décrits ci-après.

Comme indiqué ci-dessus, les fibres végétales traitées peuvent encore contenir des composés chimiques indésirables et de la lignine (ou particules de bois). Ainsi, après traitement, les fibres végétales peuvent contenir encore jusqu'à environ 12 % en poids de composés chimiques indésirables et de la lignine. De préférence, après traitement, les fibres végétales contiennent au plus 10 % en poids de composés chimiques indésirables. La quantité maximale de lignine acceptable dans les fibres végétales traitées est au plus de 10 % en volume. Les fibres végétales traitées contiennent au plus 5 % en volume de particules de bois. Lorsque les fibres végétales traitées contiennent de l'ordre de 3 % à environ 5 % en volume de particules de bois, l'article selon l'invention présente un aspect décoratif finement tacheté.

Le traitement chimique des fibres végétales, pour éliminer au moins partiellement les composés chimiques indésirables, est plus ou moins poussé selon le degré de pureté que l'on désire atteindre. Toutefois, le traitement ne doit pas conduire à une modification sensible de la structure chimique cellulosique des fibres végétales. En particulier, l'oxydation de la cellulose doit être évitée.

Un premier type de traitement chimique, applicable aux fibres végétales, consiste à les soumettre à un bain aqueux, à température élevée, comprise entre environ 60°C et environ 95°C, ce bain aqueux contenant au moins un agent alcalin, encore mieux un agent alcalin carbonaté tel que le (bi)carbonate de sodium ou le (bi)carbonate de potassium. Ce traitement, dont la durée est variable selon la température du bain, est suivi d'opérations de rinçage, si nécessaire d'une neutralisation, et d'un séchage. Ce traitement permet en particulier d'éliminer une grande partie des substances grasses, de la pectine et de l'hémicellulose associées aux fibres végétales sans en altérer les propriétés mécaniques.

Un second type de traitement applicable aux fibres végétales est un traitement chimique plus poussé que le précédent en ce sens qu'il conduit à une élimination plus importante de composés chimiques indésirables. Ce second traitement chimique consiste à soumettre les fibres végétales à un bain aqueux possédant les caractéristiques qui suivent :
- le bain aqueux à une température élevée, comprise entre environ 60°C et environ 95°C; et
- le bain aqueux à un pH basique, de préférence, compris entre 9 et 10 contenant au moins un agent alcalin; et
- le bain aqueux contient au moins un agent de blanchiment, de préférence choisi parmi le peroxyde d'hydrogène, les hypochlorites en particulier l'eau de Javel ou les chlorites. De préférence, on utilise le peroxyde d'hydrogène.

Le traitement chimique à l'aide d'un agent de blanchiment est plus ou moins poussé selon que l'on désire une fibre de couleur blanche plus ou moins poussée.

Le traitement chimique est suivi d'opérations de rinçage, de neutralisation et de séchage des fibres végétales traitées.

Avantageusement, dans le cadre du second traitement précité, on ajoute un ou plusieurs agents mouillants et détergents, généralement à raison de 0,5 à 2 g/litre de la solution aqueuse de traitement.

En outre, dans le cadre du second traitement précité, il peut être avantageux d'ajouter :
- un ou plusieurs agents séquestrants, à raison d'environ 0,5 à 2 g/litre de solution ;
- un ou plusieurs agents alcalins, de préférence un agent alcalin carbonaté tel que le bicarbonate de sodium, à raison d'environ 0,5 à 2 g/litre de solution.

Bien entendu, les traitements chimiques précités ne doivent pas affecter les fibres végétales et donc être sans action sur la cellulose de ces fibres.

Avantageusement, le traitement des fibres végétales visant à éliminer une grande partie des composés chimiques indésirables peut être suivi d'une opération classique de teinture à l'aide d'un bain aqueux contenant au moins un agent colorant.

Egalement, le traitement des fibres végétales visant à éliminer une grande partie des composés chimiques indésirables, ces fibres étant éventuellement teintées, peut être suivi d'un traitement superficiel des fibres végétales afin de leur incorporer un agent lubrifiant et ainsi faciliter le travail au cours de l'aiguilletage.

En l'absence d'adjuvants supplémentaires, tels que, par exemple, des charges minérales, la densité moyenne de l'article selon l'invention est au plus égale à 1. De préférence, la densité moyenne de l'article est comprise entre 0,75 et 0,99 g/cm³ (bornes incluses).

De préférence, les fibres synthétiques thermoplastiques ont une longueur moyenne au moins égale à 30 mm ou supérieure.

La finesse des fibres synthétiques thermoplastiques est avantageusement comprise entre 1,5 et 17 dtex (0,15 et 1,7 tex).

Comme fibres thermoplastiques, les fibres de polypropylène sont préférées, et encore mieux les fibres à base d'homopolymère de propylène.

Conviennent particulièrement bien les fibres de polypropylène vérifiant l'une des deux propriétés qui suivent, de préférence les deux propriétés qui suivent
(1) le polypropylène a une température de fusion comprise entre 155 et 175 °C (bornes incluses) dans les conditions de la norme NFT 51 223, par calorimétrie par analyse différentielle (DSC) (la température de fusion correspond au maximum du pic de fusion de thermogrammes de fusion enregistrés de 50 à 200°C, à 10°C par minute);
(2) le polypropylène présente une viscosité en oscillation à une fréquence angulaire de 0,1 radian par seconde (rad/s), à 200°C, comprise entre 250 et 2500 Pa.s (bornes incluses). C'est dans ces conditions de viscosité en oscillation que les plus faibles émissions de composés volatils (fogging) ont été constatées, ainsi que les meilleures résistances en flexion. Egalement, grâce à ces conditions de viscosité en oscillation, il n'est pas nécessaire d'ajouter un agent pour rendre compatibles les fibres de polypropylène et les fibres végétales. La viscosité en oscillation ou viscosité dynamique est mesurée à l'aide d'un rhéomètre rotatif sous azote, par exemple à l'aide du rhéomètre CSL 500 fabriqué par la société CARRI MED. Cette mesure consiste en un suivi du paramètre de viscosité en fonction de la fréquence angulaire. Si cette mesure est réalisée à une fréquence angulaire supérieure, la valeur de la viscosité en oscillation du polypropylène sera comprise entre des bornes différentes de celles précitées. Ainsi :
   - si la mesure est réalisée à une fréquence angulaire de 10 radians par seconde, à 200°C, la viscosité en oscillation du polypropylène sera comprise entre 240 et 1000 Pa.s (bornes incluses) ;
   - si la mesure est réalisée à une fréquence angulaire de 100 radians par seconde, à 200°C, la viscosité en oscillation du polypropylène sera comprise entre 140 et 400 Pa.s

Conformément à l'invention, l'article est à base, en proportion en poids, majoritairement de matière synthétique thermoplastique, c'est-à-dire plus de 50 % en poids rapporté au poids total de l'article, et minoritairement de fibres végétales traitées, c'est-à-dire moins de 50 % en poids rapporté au poids total de l'article.

Avantageusement, le poids de la matière synthétique thermoplastique, quand elle est sous la forme de fibre et est en polypropylène, n'excède pas 90 % du poids total de l'article, de préférence encore, est inférieur à 70 % du poids total de l'article, encore mieux est de l'ordre de 55 à 65 % du poids total de l'article.

Comme fibres végétales, conviennent à l'invention notamment les fibres de lin, les fibres de chanvre, les fibres de kénaf, les fibres de ramie, les fibres de sisal, les fibres de jute, les fibres de banane, les fibres de phormium et les fibres de coco. Conviennent plus particulièrement les fibres de chanvre et les fibres de lin. De préférence, les fibres végétales traitées ont une longueur moyenne au moins égale à 30 mm.

Avantageusement, on utilise des fibres de lin pour préparer l'article selon l'invention, ces fibres de lin pouvant être sous la forme d'étoupes de teillage ou d'étoupes de peignage. On utilise de préférence des étoupes teillées de lin, issues d'une première étape de teillage du lin, à l'issue de laquelle on obtient des étoupes brutes de lin, suivie d'une seconde étape de teillage de ces étoupes brutes de lin.

L'article selon l'invention peut également contenir, dans des proportions mineures, divers additifs, sous réserve qu'ils soient compatibles avec les constituants principaux de cet article et ne se dégradent pas au cours de la préparation de l'article thermofaçonné selon l'invention. A titre d'exemple, on peut citer :
- un agent colorant, de préférence un agent colorant ayant une affinité pour la cellulose des fibres végétales, et/ou
- une (ou plusieurs) charge finement divisée telle que, par exemple, du charbon actif, des zéolithes, du carbonate de calcium et de la silice, éventuellement imprégnée de substances chimiques actives, et/ou
- un agent hygroscopique pour minimiser, voire empêcher la fixation d'eau, par les fibres végétales,
- d'autres types de fibres pour accroître sa tenue au feu et/ou sa résistance en traction, telles que des fibres de verre, et/ou
- au moins un agent anti oxydant, et/ou
- au moins un agent anti-ultraviolet, etc.

Ainsi, l'addition d'au moins un agent antioxydant et d'au moins un agent anti-ultraviolet est particulièrement recommandée dans le cas d'un article utile pour la fabrication d'une pièce automobile destinée à être exposée à la lumière, à l'air, à l'action de la température ambiante, telle qu'un tableau de bord.

Selon une variante préférentielle de l'invention, l'article contient en outre au moins un agent fongicide capable de résister sans se dégrader à une température comprise entre 160 et 220°C (bornes incluses), de préférence choisi parmi les agents fongicides appartenant à la famille des imidazoles, encore mieux appartenant à la famille des esters d'alkyle d'acide carbamique de benzimidazole.

L'article selon l'invention est obtenu par thermofaçonnage d'un mat fibreux, aiguilleté et flexible, donc présentable en rouleau, constitué majoritairement (en poids) de fibres synthétiques thermoplastiques et minoritairement (en poids) de fibres végétales, traitées chimiquement afin d'en éliminer une grande partie des composés chimiques indésirables. En outre, les fibres synthétiques thermoplastiques et les fibres végétales traitées sont mélangées et réparties de façon sensiblement uniforme dans le mat. Pour l'obtention d'un tel mat, ces deux types de fibres sont mélangés intimement par brassage de fibres, puis cardées, nappées. Elles sont ensuite entrelacées par aiguilletage suivant le procédé textile classique. Le mat fibreux obtenu à l'issue de ces opérations est monocouche, c'est-à-dire que le mélange et la répartition des fibres sont sensiblement identiques sur toute l'épaisseur.

Le mat fibreux est ensuite transformé en l'article selon l'invention par moulage à chaud sous pression.

Avantageusement, la fabrication de cet article comprend les deux étapes successives suivantes :
(1) on soumet un mat fibreux, flexible et aiguilleté, constitué minoritairement de fibres végétales traitées et majoritairement de fibres synthétiques thermoplastiques, ces fibres étant mélangées et réparties de façon sensiblement uniforme dans le mat, à une première opération de chauffage par contact, à une température comprise entre 160 et 220°C (bornes incluses), sous une pression inférieure ou égale à 8 bars ; cette étape peut être réalisée entre deux plateaux munis de résistances, séparés d'au plus 4 mm pendant une durée suffisante pour fondre les fibres synthétiques thermoplastiques, généralement de l'ordre de 40 à 130 secondes ;
(2) le mat comprimé obtenu à l'issue de l'étape (1) est ensuite soumis à une seconde opération de compression sous une pression de l'ordre de 5 à 20 bars (bornes incluses), dans un moule à la géométrie voulue, ce moule étant froid, c'est-à-dire à une température régulée entre environ 10 et environ 20°C.

Cette seconde opération dure généralement de l'ordre de 10 à 40 secondes. L'épaisseur de l'article à l'issue de cette seconde étape est généralement comprise entre 0,3 et 4 mm (bornes incluses). Outre la forme générale de l'article, un aspect de surface particulier peut lui être donné lors de la seconde étape.

Ultérieurement, l'article thermofaçonné peut être transformé et/ou découpé et/ou poinçonné suivant les techniques classiques utilisées dans l'industrie automobile. L'article selon l'invention peut être utilisé seul, sans être associé à d'autres matériaux, pour fabriquer des pièces de véhicules routiers telles que des planches de tableau de bord, des tablettes, des encadrements de fenêtres, etc.

On peut également associer deux articles selon l'invention, celui destiné à constituer la couche extérieure visible contenant en plus un ou plusieurs adjuvants particuliers, tels qu'un agent colorant et/ou un agent antioxydant et/ou un agent anti-ultraviolet, ou ayant un état de surface particulier.

On peut aussi utiliser l'article selon l'invention à titre de support et lui associer diverses couches supplémentaires telles qu'une couche extérieure décorative, par exemple un textile ou une couche en polyoléfine.

En outre, le cas échéant, on peut interposer entre l'article selon l'invention et la couche extérieure décorative, une couche isolante, de préférence pour le confort et/ou l'isolation thermique, et/ou l'isolation phonique, par exemple une couche de mousse polyuréthane ou de mousse polyoléfine ou de mousse en polychlorure de vinyle (PVC).

Les stratifiés obtenus sont notamment utiles à la fabrication de panneaux de porte.

Les principales performances atteintes par l'article selon l'invention, par comparaison avec l'art antérieur précité, sont :
- la forte diminution de la production de gaz odorants par les articles rigides après thermofaçonnage, et
- la forte diminution du phénomène de formation d'un voile sur une vitre (fogging), susceptible de gêner l'automobiliste ;
- l'absence de dégradation de l'article en présence d'humidité, par suite du développement de moisissures, dans des conditions normales d'utilisation ;
- à grammage équivalent, les caractéristiques mécaniques sont équivalentes ou supérieures. Ainsi, le module de flexion de l'article selon l'invention est plus élevé.

D'autres avantages apparaîtront dans les exemples donnés ci-après à titre illustratif et non limitatif de la présente invention.

### EXEMPLE 1

### 1- Préparation des mats M1 et M2

Deux mats fibreux aiguilletés M1 et M2, ayant un grammage de 1800 g/m², ont été préparés à partir de 40 % en poids de fibres de lin et de 60 % en poids de fibres de polypropylène.

Les fibres de polypropylène utilisées ont une longueur égale à 40 mm et une finesse moyenne égale à 2,2 dtex.

Ces fibres sont constituées d'un homopolymère de propylène présentant les caractéristiques suivantes :
- température de fusion : 165,7°C (selon NFT 51223) ;
- viscosité en oscillation à 0,1 rad/s à 200°C: 974,5 Pa.s

Les fibres de lin utilisées sont des étoupes teillées de lin et ont une longueur moyenne égale à 70 mm. Les mats M1 et M2 diffèrent par le fait que :
- les fibres de lin utilisées pour préparer le mat M1 sont brutes ou écrues, c'est-à-dire qu'elles n'ont pas subies un traitement chimique particulier après rouissage, broyage, et teillage ;
- tandis que les fibres de lin utilisées pour préparer le mat M2 ont été soumises à un traitement chimique afin d'éliminer, une grande partie des composés chimiques indésirables associés au lin.

Le traitement chimique consiste essentiellement à traiter les étoupes teillées de lin au moyen d'une solution aqueuse à une température voisine de 95°C pendant environ 3h30. Cette solution aqueuse renferme :
- 2 à 6 g par litre de soude (NaOH) ;
- 4 à 8 g par litre de carbonate de sodium ;
- 10 à 15 cm³ d'eau oxygénée (H₂O₂) à 130 volumes d'oxygène (soit 10 à 15 cm³ d'eau oxygénée à 35 % en poids) ;
- 2,5 à 4 cm³ par litre de silicate de soude à 35-37 % en poids ;
- un agent séquestrant à raison de 1g par litre ;
- un agent mouillant à raison de 1g par litre.

Ce traitement chimique est suivi d'un rinçage soigné à l'eau des fibres de lin traitées en plusieurs étapes de rinçage, en l'occurrence 3 étapes successives de rinçage d'environ 20 minutes chacune, réalisées respectivement à 60°C, 50°C et 30°C.

La seconde eau de rinçage contient en outre de l'acide formique pour la neutralisation à pH 7. Puis, les fibres de lin traitées sont séchées.

Ensuite :
- on réalise un mélange intime des fibres de lin (selon le cas traitées ou non) et des fibres de polypropylène par brassage de ces fibres ;
- puis on procède au cardage des fibres pour finir le mélange intime et affiner les fibres de lin ;
- puis on effectue le nappage du voile de carde par superposition des voiles de carde de 20 à 25 g/m² ;
- on procède après à un pré-aiguilletage à raison de 4 coups d'aiguilles par cm², suivi d'un aiguilletage à raison de 55 coups d'aiguilles par cm² sur une profondeur d'aiguilletage de 14 mm. Les mats M1 et M2 obtenus ont une épaisseur d'environ 14 mm.

### 2- Préparation des articles A1 et A2, à partir des mats M1 et M2.

Les mats M1 et M2 sont ensuite thermofaçonnés selon les étapes et conditions suivantes, pour leur donner la forme de panneau de porte:

### Etape 1

Les mats M1 et M2 sont soumis à une première opération de chauffage par contact, à 210°C, sous une légère pression de 2 bars pendant 100 secondes, dans une presse à plateaux chauffants. Le polypropylène fond et se transforme en liant du réseau de fibres de lin.

### Etape 2

A l'issue de l'étape 1, on comprime ensuite les produits obtenus à une épaisseur de 2 mm et à une densité de 0,9 g/cm³, dans un moule froid à température régulée à 15°C, sous une pression de 10 bars.

Les articles A1 et A2 ont dans ce cas la forme de panneau de porte.

### 3- Evaluation des articles A1 et A2

### 3.1 Test visant à évaluer la production de gaz odorants

Les méthodes d'évaluation GME 60276A3 et 60276B3 de la société General Motors ont été utilisées.

Elles consistent à découper des éprouvettes dans les articles A1 et A2 et à conditionner chaque éprouvette dans un récipient fermé en verre de volume égal.

Dans le cas de la méthode GME 60276A3, le conditionnement des éprouvettes s'effectue à 40°C pendant 24 heures en présence d'eau désionisée dans le récipient fermé à l'aide d'un bouchon étanche.

Dans le cas de la méthode GME 60276B3, le conditionnement des éprouvettes s'effectue à 70°C pendant 24 heures, sans eau dans le récipient fermé à l'aide d'un bouchon étanche.

Trois éprouvettes ont été découpées et testées pour chaque type d'article.

Après refroidissement à 23°C, les récipients sont soumis à une évaluation olfactive par 10 juges qui doivent coter l'odeur d'après l'échelle suivante :
1- odeur intolérable
2- très contrariante
3- contrariante
4- désagréable
5- limite du supportable
6- supportable
7- légère
8- perceptible
9- à peine perceptible
10- sans odeur

L'exigence à atteindre est une cotation supérieure ou égale à 6.

Les résultats

| | **Article évalué** | |
|---|---|---|
| **Méthodes d'évaluation** | A1 | A2 |
| GME 60276 A3 | 5 | 6,2 |
| GME 60276 B3 | 5,3 | 7 |

On constate donc une nette diminution de la production de gaz odorants de l'article A2 qui renferme des fibres de lin traitées chimiquement.

Ces résultats ont été confirmés à l'aide d'une analyse par chromatographie en phase gazeuse, couplée à une spectrométrie de masse.

Ceci permet d'étudier les composés organiques volatils émis par un échantillon de pièce d'habitacle.

Les éprouvettes sont conditionnées dans des sacs en matière plastique, en l'occurrence le polymère de marque commerciale TEDLAR ®, en présence d'azote dans une étuve à 90°C pendant 30 minutes. Les composés volatils relâchés dans l'azote sont ensuite piégés sur une cartouche adsorbante avant injection dans un chromatographe en phase gazeuse couplé à une spectromètre de masse (GC-MS).

La teneur en composés organiques des effluents gazeux est mesurée par un chromatographe gazeux couplé à un spectromètre de masse (GC-MS) (NF X20-302 et NF X20-303) pour l'identification et la quantification de chaque composé. L'injection des composés dans le GC-MS est réalisée par un thermodésorbeur à piège cryogénique chauffé à 250°C.

| Effet du blanchiment des fibres de lin sur les émissions de composés volatils après étuvage des éprouvettes | | | |
|---|---|---|---|
| **Famille chimique des composés volatils** | **Nature chimique des composés volatils** | **Quantité de composés volatils émise par les éprouvettes issues de A1, en mg pour 20 g d'échantillon** | **Action du blanchiment** **Réduction des émissions de composés volatils par les éprouvettes issues de A2, exprimés en % en poids** |
| Cétones | Acétone | 26,5 | 80 % |
| | Butanone | 257,7 | 91 % |
| | méthylpentanone | 21,6 | 100 % |
| Acides | Acide Acétique | 25 | 100 % |
| | Acide Pentanoïque | 48,4 | 100 % |
| Aldéhydes | Pentanal | 17,32 | 100 % |
| | Hexanal | 66,62 | 55 % |
| | Heptanal | 23,58 | 52 % |
| | Octanal | 26,68 | 56 % |
| | Benzaldéhyde | 16,44 | 48 % |
| Alcanes | méthyl-2 hexane | 38,6 | 100 % |
| | méthyl-3 hexane | 48,28 | 89 % |
| | Heptane | 96 | 88 % |
| | méthylcyclohexane | 100,62 | 90 % |
| | éthylcyclopentane | 8,64 | 100 % |
| | Alcane C9 | 3,5 | 100 % |
| | Alcane C14 | 62,82 | 80 % |
| | Alcane C13 | 17,52 | 57 % |
| Aromatiques | Toluène | 26,52 | 80 % |
| | Ethylbenzène | 30,82 | 100 % |
| | Phénol | 518,5 | 94 % |
| | méthoxy propényl Benzène | 93 | 83 % |
| | triméthyl Benzène | 22,4 | 55 % |
| Amides | Diméthyl acétamide | 70,3 | 88 % |

Il a ainsi pu être montré que l'article A2 selon l'invention qui renferme des fibres de lin traitées chimiquement émet nettement moins de composés organiques volatils après thermofaçonnage et une chute substantielle de l'intensité d'odeurs.

### 3.2 Test visant à évaluer la formation d'un voile sur une vitre (fogging)

La méthode d'évaluation DIN 75201-A a été utilisée.

Des éprouvettes de 80 mm de diamètre ont été découpées dans les articles A1 et A2 et ont été placées dans un bécher cylindrique de 80 mm de diamètre.

Ces béchers sont ensuite disposés dans un bain d'huile. On obstrue l'ouverture des béchers avec une plaque de verre.

On chauffe le bain d'huile pendant 3 heures à 90°C : des composés se volatilisent et s'échappent des éprouvettes, pour se déposer sur la plaque de verre qui est refroidie par un courant d'eau à 18°C environ, pour assurer la condensation des composés volatils.

On caractérise ce dépôt au réflectomètre (modèle RB60 commercialisé par la société LABOMAT ESSOR), par un pourcentage de réflectance selon un angle de 60°.

Les résultats obtenus pour les articles A1 et A2 sont les suivants :

| | **Référence de l'article évalué** | |
|---|---|---|
| | **A1** | **A2** |
| **Pourcentage de réflectance** | 76 % | 93 % |

### 3.3 Test visant à évaluer le développement de moisissures

On utilise la méthode GME 60287 de la société General Motors. On découpe des éprouvettes de dimension identique dans les articles A1 et A2. Les éprouvettes sont suspendues dans des flacons au préalable lavés, stérilisés puis rincés.

On introduit dans le fond des flacons de l'eau distillée de telle sorte que les éprouvettes ne soient jamais au contact de l'eau. Les flacons sont fermés de façon étanche.

On chauffe les flacons pendant 14 jours à 40°C.

Après 14 jours, on recherche l'éventuelle présence de moisissures.
Remarque : toute matière végétale, en présence d'oxygène, d'humidité et à une certaine température, est susceptible de développer des champignons et des moisissures.

### Résultat

| **Article A1** | **Article A2** |
|---|---|
| Développement de champignons verts ou gris | Pas de moisissures constatées visuellement |

Après analyse microbiologique, il ressort que les champignons qui se sont développés dans les éprouvettes A1 sont :
- *Aspergillus Fumigatus M137 ;*
- *Trichoderma Konigii M136.*

### EXEMPLE 2

Un mat fibreux aiguilleté M3 a été préparé en reproduisant les conditions opératoires énoncées dans l'exemple 1. La seule différence réside dans le traitement des étoupes teillées de lin, qui est dans l'exemple 2 est un traitement par lessivage.

Le lessivage consiste essentiellement à traiter les étoupes teillées de lin au moyen d'une solution aqueuse à température élevée contenant un agent chimique tel que la soude caustique, la chaux ou un carbonate alcalin ou alcalinoterreux. Dans l'exemple 2, on utilise une solution aqueuse à une température voisine de 95°C pendant environ 0 h 30.

Cette solution aqueuse renferme :
- 2 à 6 g par litre de soude (NaOH) ;
- 4 à 8 g par litre de (bi)carbonate de sodium ;
- un agent séquestrant à raison de 1 g par litre ;
- un agent mouillant et détergent, à raison de 1 g par litre.

Ce traitement chimique est suivi d'un rinçage soigné à l'eau des fibres de lin traitées en plusieurs étapes de rinçage.

La seconde eau de rinçage contient de l'acide formique pour la neutralisation à pH 7.

Puis on sèche les fibres de lin traitées obtenues.

Ensuite, on prépare un article A3 à partir du mat M3, en reprenant les conditions opératoires de l'exemple 1.

### EVALUATION DE L'ARTICLE A3

### Test visant à évaluer la formation d'un voile sur une vitre (fogging)

Ce test a été réalisé dans les conditions énoncées dans l'exemple 1 sur trois éprouvettes de l'article A3.

En moyenne sur les trois éprouvettes, on obtient un pourcentage de réflectance égal à 92 %.

En outre, le disque de buée qui se dépose sur la plaque de verre est homogène et transparent.

### Test visant à évaluer le développement de moisissures

Ce test a été réalisé dans les conditions énoncées dans l'exemple 1 sur trois éprouvettes de l'article A3.

Après 14 jours, on ne relève pas la présence de moisissures. En outre, l'odeur des éprouvettes de l'article A3 est peu prononcée et n'est pas désagréable.

## Revendications

1. Article, utile notamment pour la fabrication de pièces de véhicules routiers, à base de fibres végétales et de matière synthétique thermoplastique, **caractérisé en ce que** :
- l'article est monocouche,
- l'article a une densité moyenne égale ou supérieure à 0,70 g/cm³,
- l'article a une densité moyenne au plus égale à 1 g/cm³ en l'absence d'adjuvants supplémentaires,
- l'article renferme des fibres végétales traitées, c'est-à-dire des fibres végétales plus ou moins purifiées ayant subi des traitements visant à éliminer une grande partie ou la totalité de la lignine, suivis par un traitement chimique en bain aqueux à température élevée contenant au moins un agent alcalin et visant à éliminer une grande partie de composés chimiques indésirables comprenant la pectine, les substances grasses et l'hémicellulose, sans modification sensible de la structure chimique cellulosique des fibres végétales et sans en altérer les propriétés mécaniques,
- les fibres végétales traitées contiennent au plus jusqu'à 12 % en poids de composés chimiques indésirables, au plus jusqu'à 10 % en volume de lignine et au plus jusqu'à 5 % en volume de particules de bois,
- l'article est obtenu par thermofaçonnage d'un mat fibreux aiguilleté, constitué par moins de 50 % en poids de fibres végétales traitées et plus de 50 % en poids de fibres de matière synthétique thermoplastique, et,
- les fibres végétales traitées et la matière, synthétique thermoplastique, sont mélangées et réparties de façon sensiblement uniforme dans le mat fibreux aiguilleté, conférant à l'article son caractère monocouche.

2. Article selon la revendication 1, **caractérisé en ce que** les fibres végétales traitées sont en outre teintées.

3. Article selon l'une des revendications précédentes, **caractérisé en ce qu'**il présente une densité moyenne comprise entre 0,75 et 0,99, bornes incluses.

4. Article selon l'une des revendications 2 et 3, **caractérisé en ce que** les fibres synthétiques thermoplastiques présentent une longueur moyenne au moins égale à 30 mm ou supérieure.

5. Article selon l'une des revendications 2 à 4, **caractérisé en ce que** les fibres synthétiques thermoplastiques présentent une finesse comprise entre 1,5 et 17 dtex.

6. Article selon l'une des revendications 2 à 5, **caractérisé en ce que** les fibres synthétiques thermoplastiques sont à base de polypropylène.

7. Article selon la revendication 6, **caractérisé en ce que** les fibres synthétiques thermoplastiques sont à base d'un homopolymère de propylène.

8. Article selon la revendication 6 ou 7, **caractérisé en ce que** la température de fusion du polypropylène constitutif des fibres est compris entre 155 et 175°C (bornes incluses), dans les conditions de la norme NFT 51223.

9. Article selon la revendication 6 ou 7, **caractérisé en ce que** la viscosité en oscillation à 0,1 rad/s à 200°C, du polypropylène constitutif des fibres, est comprise entre 250 et 2500 Pa.s, bornes incluses.

10. Article selon l'une des revendications 6 à 9, **caractérisé en ce que** les fibres de polypropylène représentent au plus 90 % du poids de l'article.

11. Article selon la revendication 10, **caractérisé en ce que** les fibres de polypropylène représentent de l'ordre de 55 % à 65 % du poids de l'article.

12. Article selon l'une des revendications précédentes, **caractérisé en ce que** la longueur moyenne des fibres végétales traitées est au moins égale à 30 mm.

13. Article selon l'une des revendications précédentes, **caractérisé en ce que** les fibres végétales traitées sont à base de fibres de lin.

14. Article selon la revendication 13, **caractérisé en ce que** les fibres de lin sont des étoupes de teillage.

15. Article selon la revendication 14, **caractérisé en ce que** les fibres de lin sont des étoupes teillées.

16. Article selon l'une des revendications précédentes, **caractérisé en ce que** le grammage de l'article est compris entre 200 et 3500 g/m².

17. Article selon l'une des revendications précédentes, **caractérisé en ce qu'**il renferme en outre au moins un agent colorant, et/ou au moins une charge finement divisée, et/ou un agent hygroscopique, et/ou d'autres types de fibres afin d'accroître la tenue au feu du produit rigide et/ou sa résistance en traction, et/ou au moins un agent antioxydant, et/ou au moins un agent anti-ultraviolet.

18. Article selon l'une des revendications précédentes, **caractérisé en ce qu'**il renferme en outre au moins un agent fongicide capable de résister sans se dégrader à une température comprise entre 160 et 200°C, bornes incluses.

19. Article selon la revendication 18, **caractérisé en ce que** l'agent fongicide est choisi parmi les agents fongicides appartenant à la famille des imidazoles, de préférence appartenant à la famille des esters d'alkyle d'acide carbamique de benzimidazole.

20. Article selon l'une des revendications précédentes, **caractérisé en ce qu'**il présente une épaisseur comprise entre 0,3 et 4 mm, bornes incluses.

21. Procédé de fabrication d'un article utile notamment pour la fabrication de pièces de véhicules routiers, **caractérisé en ce que** l'on soumet un mat fibreux aiguilleté, constitué, d'une part, minoritairement en poids de fibres végétales traitées, c'est-à-dire des fibres végétales plus ou moins purifiées ayant subi des traitements visant à éliminer une grande partie ou la totalité de la lignine, suivis par un traitement chimique en bain aqueux à température élevée, comprise entre environ 60° C et environ 95° C, ce bain aqueux contenant au moins un agent alcalin et visant à éliminer une grande partie de composés chimiques indésirables comprenant la pectine, les substances grasses et l'hémicellulose, sans modification sensible de la structure chimique cellulosique des fibres végétales et sans en altérer les propriétés mécaniques, et, d'autre part, majoritairement en poids de fibres synthétiques thermoplastiques, les fibres végétales traitées et les fibres synthétiques thermoplastiques étant réparties de façon sensiblement uniforme dans le mat et les fibres végétales traitées contenant au plus jusqu'à 12 % en poids de composés chimiques indésirables, au plus jusqu'à 10 % en volume de lignine et au plus jusqu'à 5 % en volume de particules de bois, à une première opération de chauffage par contact, à une température comprise entre 160 et 220° C, bornes incluses, sous une pression inférieure ou égale à 8 bars, suivie d'une seconde opération de compression sous une pression de l'ordre de 5 à 20 bars, bornes incluses, dans un moule froid, pour obtenir un article monocouche, de densité moyenne égale ou supérieure à 0,7 g/cm³ et en l'absence d'adjuvants supplémentaires au plus égale à 1 g/cm³.

22. Procédé selon la revendication 21, **caractérisé en ce que** l'agent alcalin est carbonaté.

23. Procédé selon la revendication 21, **caractérisé en ce que** les fibres sont traitées à l'aide d'un bain aqueux chaud, ayant un pH basique et contenant au moins un agent de blanchiment.

24. Procédé selon la revendication 23, **caractérisé en ce que** l'agent de blanchiment est le peroxyde d'hydrogène.

25. Utilisation de l'article selon l'une des revendications 1 à 20 et de l'article produit selon le procédé de fabrication selon l'une des revendications 21 à 24 pour la fabrication de pièces de véhicules routiers.

26. Utilisation de l'article selon l'une des revendications 1 à 20 et de l'article produit selon le procédé de fabrication selon l'une des revendications 21 à 24 pour la fabrication d'un article stratifié, selon laquelle cet article constitue une première couche sur laquelle on fixe une couche décorative et, le cas échéant, entre la première couche et la couche décorative, une couche intermédiaire, de préférence pour le confort et/ou l'isolation thermique et/ou l'isolation phonique.

## Claims

1. Article based on vegetable fibres and thermoplastic synthetic material and suitable in particular for the manufacture of road vehicle parts, **characterised in that**:
- the article consists of a single layer;
- the article has an average density equal to or greater than 0.70 g/cm³;
- the article has an average density of no more than 1 g/cm³ in absence of additional additives;
- the article comprises treated vegetable fibres, that means vegetable fibres more or less purified that have undergone treatments designed to eliminate a large part or the totality of lignin followed by a chemical treatment in an aqueous bath at a high temperature containing at least an alkaline agent and designed to eliminate a large part of undesirable chemical compounds comprising pectin, fatty substances and hemicellulose without noticeable deterioration of the chemical structure of the cellulose of the vegetable fibres and without deteriorating their mechanical properties;
- the treated vegetable fibres contain up to 12 % by weight of undesirable chemical compounds and up to 10 % by volume of lignin and up to 5 % by volume of wood particles;
- the article is obtained by thermoforming of a needled fibrous mat composed of less than 50 % by weight of treated vegetable fibres and more than 50 % by weight of fibres of thermoplastic synthetic material; and
- the treated vegetable fibres and the fibres of thermoplastic synthetic material are mixed and distributed in a substantially uniform manner in the needled fibrous mat, giving the article its single layer character.

2. Article according to claim 1, **characterised in that** the treated vegetable fibres are furthermore dyed.

3. Article according to one of the preceding claims, **characterised in that** it has an average density of between 0.75 and 0.99, limits included.

4. Article according to one of claims 2 to 3, **characterised in that** the thermoplastic synthetic fibres have an average length of at least 30 mm or more.

5. Article according to one of claims 2 to 4, **characterised in that** the thermoplastic synthetic fibres have a fineness of between 1.5 and 17 dtex.

6. Article according to one of claims 2 to 5, **characterised in that** the thermoplastic synthetic fibres are based on polypropylene.

7. Article according to claim 6, **characterised in that** the thermoplastic synthetic fibres are based on a propylene homopolymer.

8. Article according to claim 6 or 7, **characterised in that** the polypropylene constituting the fibres has a melting point of between 155 and 175 °C (limits included) under the conditions of NFT standard 51223.

9. Article according to claim 6 or 7, **characterised in that** the polypropylene constituting the fibres has an oscillation viscosity of between 250 and 2500 Pa.s, limits included, at 0.1 rad/s at 200 °C.

10. Article according to one of claims 6 to 9, **characterised in that** the polypropylene fibres constitute at most 90 % by weight of the article.

11. Article according to claim 10, **characterised in that** the polypropylene fibres constitute about 55 % to 65 % by weight of the article.

12. Article according to one of the preceding claims, **characterised in that** the treated vegetable fibres have an average length of at least 30 mm.

13. Article according to one of the preceding claims, **characterised in that** the treated vegetable fibres are based on flax fibres.

14. Article according to claim 13, **characterised in that** the flax fibres are scutching tows.

15. Article according to claim 14, **characterised in that** the flax fibres are scutched tows.

16. Article according to one of the preceding claims, **characterised in that** the grammage of the article is between 200 and 3500 g/m².

17. Article according to one of the preceding claims, **characterised in that** it furthermore contains at least one colorant and/or at least one finely divided filler and/or a hygroscopic agent and/or other types of fibres in order to increase the fire resistance of the rigid product and/or its tensile strength, and/or at least one antioxidant and/or at least one UV stabiliser.

18. Article according to one of the preceding claims, **characterised in that** it furthermore contains at least one fungicidal agent capable of withstanding a temperature of between 160 and 200°C, limits included, without degradation.

19. Article according to claim 18, **characterised in that** it is selected from fungicidal agents belonging to the imidazole class, preferably belonging to the class of alkyl esters of benzimidazolecarbamates.

20. Articles according to one of the preceding claims, **characterised in that** it has a thickness of between 0.3 and 4 mm, limits included.

21. Process for manufacturing an article suitable in particular for the manufacture of road vehicle parts, **characterised in that** a needled fibrous mat, composed, on one side, of a minor amount by weight of treated vegetable fibres, that means vegetal fibres more or less purified that have undergone treatments designed to eliminate a large part or the totality of lignin followed by a chemical treatment in a aqueous bath at a high temperature, between about 60 °C and about 95 °C, this aqueous bath containing at least one alkaline agent and designed to eliminate a large part of indesirable chemical compounds comprising pectin, fatty substances and hemicellulose, without noticeable deterioration of the chemical structure of the cellulose of the vegetal fibres and without deteriorating their mechanical properties and, on the other side, a major amount by weight of thermoplastic synthetic fibres, the treated vegetable fibres and the thermoplastic synthetic fibres being distributed in the mat in a substantially uniform manner, and the treated vegetal fibres containing up to 12 % by weight of indesirable chemical compounds, up to 10 % by volume of lignin and up to 5 % by volume of particles of wood, to a first operation of contact heating at a temperature of between 160 and 220 °C, limits included, and a pressure of less than or equal to 8 bar, followed by a second operation of compression at a pressure of about 5 to 20 bar, limits included, in a cold mould in order to obtain a single-layer article having an average density equal to or greater than 0.70 g/cm³ and, in the absence of additional additives, of no more than 1 g/cm³.

22. Process according to claim 21, **characterised in that** the alkaline agent is carbonated.

23. Process according to claim 21, **characterised in that** the fibres are treated by means of a hot aqueous bath having a basic pH and containing at least one bleaching agent.

24. Process according to claim 23, **characterised in that** the bleaching agent is hydrogen peroxide.

25. Use of the article according to one of claims 1 to 20 and the article produced according to the manufacturing process according to one of claims 21 to 24 for the manufacture of road vehicle parts.

26. Use of the article according to one of claims 1 to 20 and the article produced according to the manufacturing process according to one of claims 21 to 24, for the manufacture of a laminated article, according to which said article composes a first layer on which a decorative layer is fixed and, if desired, an intermediate layer, preferably for comfort and/or heat insulation and/or sound insulation, is fixed between the first layer and the decorative layer.

## Patentansprüche

1. Gegenstand auf Basis von Pflanzenfasern und thermoplastischem synthetischem Material, der insbesondere zur Herstellung von Bauteilen für Straßenfahrzeuge geeignet ist, **dadurch gekennzeichnet, dass**:
- der Gegenstand einschichtig ist,
- der Gegenstand eine durchschnittliche Dichte größer gleich 0,70 g/cm³ aufweist,
- der Gegenstand eine durchschnittliche Dichte von höchstens 1g/cm³ bei Abwesenheit von zusätzlichen Zusätzen aufweist,
- der Gegenstand behandelte Pflanzenfasern enthält, d.h. Pflanzenfasern die mehr oder weniger rein sind und Verfahren unterworfen wurden, die darauf abzielen einen Großteil oder die Gesamtheit des Lignins zu entfernen, gefolgt von einer chemischen Behandlung im wässrigen Bad bei hoher Temperatur, das zumindest ein alkalisches Mittel enthält und die darauf abzielt einen Großteil der unerwünschten chemischen Verbindungen zu entfernen, die Pektin, fette Substanzen und Hemizellulose umfassen, ohne merkbare Veränderung der chemischen Struktur der Zellulose der Pflanzenfasern und ohne deren mechanischen Eigenschaften zu beeinträchtigen,
- die behandelten Pflanzenfasern beinhalten bis zu 12 Gew.-% an unerwünschten chemischen Verbindungen und bis zu 10 Vol.-% Lignin und bis zu 5 Vol.-% Holzpartikel,
- der Gegenstand wird durch thermische Formgebung einer genadelten Fasermatte gewonnen, welche aus weniger als 50 Gew.-% behandelten Pflanzenfasern und mehr als 50 Gew.-% Fasern aus thermoplastischem synthetischem Material aufgebaut ist und,
- die behandelten Pflanzenfasern und die Fasern aus thermoplastischem synthetischem Material weitgehend in der genadelten Fasermatte einheitlich vermischt und verteilt sind, was dem Gegenstand seinen einschichtigen Charakter verleiht.

2. Gegenstand nach Anspruch 1, **dadurch gekennzeichnet, daß** die behandelten Pflanzenfasern außerdem auch noch gefärbt sind.

3. Gegenstand nach einem der vorhergehenden Ansprüche, **dadurch gekennzeichnet, daß** er eine durchschnittliche Dichte zwischen 0,75 und 0,99, einschließlich der Grenzwerte, aufweist.

4. Gegenstand nach einem der Ansprüche 2 oder 3, **dadurch gekennzeichnet, daß** die thermoplastischen Synthesefasern eine durchschnittliche Länge von mindestens 30 mm oder mehr aufweisen.

5. Gegenstand nach einem der Ansprüche 2 bis 4, **dadurch gekennzeichnet, daß** die thermoplastischen Synthesefasern eine Feinheit zwischen 1,5 und 17 dtex aufweisen.

6. Gegenstand nach einem der Ansprüche 2 bis 5, **dadurch gekennzeichnet, daß** die thermoplastischen Synthesefasern auf Polypropylen basieren.

7. Gegenstand nach Anspruch 6, **dadurch gekennzeichnet, daß** die thermoplastischen Synthesefasern auf einem Polypropylen-Homopolymer basieren.

8. Gegenstand nach Anspruch 6 oder 7, **dadurch gekennzeichnet, daß** der Schmelzpunkt des Polypropylens, aus dem die Fasern aufgebaut sind, unter den Bedingungen der NFT-Norm 51223 zwischen 155 und 175 °C (einschließlich der Grenzwerte) liegt.

9. Gegenstand nach Anspruch 6 oder 7, **dadurch gekennzeichnet, daß** die Schwingungsviskosität des Polypropylens, aus dem die Fasern aufgebaut sind, bei 0,1 rad/s und 200 °C zwischen 250 und 2500 Pa.s, einschließlich der Grenzwerte, liegt.

10. Gegenstand nach einem der Ansprüche 6 bis 9, **dadurch gekennzeichnet, daß** die Polypropylenfasern höchstens 90 Gew.-% des Gegenstands ausmachen.

11. Gegenstand nach Anspruch 10, **dadurch gekennzeichnet, daß** die Polypropylenfasern etwa 55 bis 65 Gew.-% des Gegenstands ausmachen.

12. Gegenstand nach einem der vorhergehenden Ansprüche, **dadurch gekennzeichnet, daß** die durchschnittliche Länge der behandelten Pflanzenfasern mindestens 30 mm ist.

13. Gegenstand nach einem der vorhergehenden Ansprüche, **dadurch gekennzeichnet, daß** die behandelten Pflanzenfasern auf Flachsfasern basieren.

14. Gegenstand nach Anspruch 13, **dadurch gekennzeichnet, daß** es sich bei den Flachsfasern um Schwingabfälle handelt.

15. Gegenstand nach Anspruch 14, **dadurch gekennzeichnet, daß** es sich bei den Flachsfasern um geschwungene Abfälle handelt.

16. Gegenstand nach einem der vorhergehenden Ansprüche, **dadurch gekennzeichnet, daß** das Flächengewicht des Gegenstands zwischen 200 und 3500 g/m²liegt.

17. Gegenstand nach einem der vorhergehenden Ansprüche, **dadurch gekennzeichnet, daß** er außerdem auch noch mindestens ein Farbmittel und/oder mindestens einen feinverteilten Füllstoff und/oder ein hygroskopisches Mittel und/oder andere Arten von Fasern zur Erhöhung der Brandfestigkeit des steifen Produkts und/oder seiner Zugfestigkeit und/oder mindestens ein Antioxidans und/oder mindestens einen UV-Stabilisator enthält.

18. Gegenstand nach einem der vorhergehenden Ansprüche, **dadurch gekennzeichnet, daß** er außerdem auch noch mindestens ein Fungizid beinhaltet, das einer Temperatur zwischen 160 und 200 °C, einschließlich der Grenzwerte, widerstehen kann, ohne abgebaut zu werden.

19. Gegenstand gemäß Anspruch 18, **dadurch gekennzeichnet, daß** das Fungizid ausgewählt ist unter Fungiziden aus der Klasse der Imidazole, bevorzugt aus der Klasse der Benzimidazolcarbamidsäurealkylester.

20. Gegenstand nach einem der vorhergehenden Ansprüche, **dadurch gekennzeichnet, daß** er eine Dicke zwischen 0,3 und 4 mm, einschließlich der Grenzwerte, aufweist.

21. Verfahren zur Herstellung eines, insbesondere zur Herstellung von Bauteilen für Straßenfahrzeuge geeigneten Gegenstands, **dadurch gekennzeichnet, daß** man eine genadelte Fasermatte, die, einerseits, aus einer Minderheit von Gewichtsanteilen von behandelten Pflanzenfasern, d.h. Pflanzenfasern die mehr oder weniger rein sind und Verfahren unterworfen wurden, die darauf abzielen einen Großteil oder die Gesamtheit des Lignins zu entfernen, gefolgt von einer chemischen Behandlung im wässrigen Bad bei hoher Temperatur zwischen etwa 60 °C und etwa 95 °C, das zumindest ein alkalisches Mittel enthält und das darauf abzielt einen Großteil der unerwünschten chemischen Verbindungen zu entfernen, die Pektin, fette Substanzen und Hemizellulose umfassen, ohne merkbare Veränderung der chemischen Struktur der Zellulose der Pflanzenfasern und ohne deren mechanischen Eigenschaften zu beeinträchtigen und, andererseits, einer Mehrheit von Gewichtsanteilen von thermoplastischen Synthesefasern aufgebaut ist, wobei die behandelten Pflanzenfasern und die thermoplastischen Synthesefasern in der Matte weitgehend einheitlich verteilt sind, und die behandelten Pflanzenfasern höchstens bis zu 12 Gew.-% an unerwünschten chemischen Verbindungen, höchstens bis zu 10 Vol.-% Lignin und höchstens bis zu 5 Vol.-% Holzpartikel enthalten, einem ersten Arbeitsgang bei einer Temperatur zwischen 160 und 220 °C, einschließlich der Grenzwerte, unter einem Druck kleiner gleich 8 bar einer Kontakterhitzung und danach in einem zweiten Arbeitsgang einer Kompression in einem kalten Formwerkzeug bei einem Druck von etwa 5 bis 20 bar, einschließlich der Grenzwerte, unterwirft, wobei man einen einschichtigen Gegenstand mit einer durchschnittlichen Dichte größer gleich 0,70 g/cm³ und bei Abwesenheit zusätzlicher Zusätze höchstens gleich 1 g/cm³ erhält.

22. Verfahren nach Anspruch 21, bei dem das alkalische Mittel Carbonat enthält.

23. Verfahren nach Anspruch 21, **dadurch gekennzeichnet, daß** die Behandlung der Fasern mit Hilfe eines heißen wässrigen Bads, das einen basischen pH-Wert aufweist und mindestens ein Bleichmittel enthält, erfolgt.

24. Verfahren nach Anspruch 23, bei dem man als Bleichmittel Wasserstoffperoxid einsetzt.

25. Verwendung des Gegenstands nach einem der Ansprüche 1 bis 20 und des nach dem Herstellungsverfahren nach einem der Ansprüche 21 bis 24 hergestellten Gegenstands zur Herstellung von Bauteilen für Straßenfahrzeuge.

26. Verwendung des Gegenstands nach einem der Ansprüche 1 bis 20 und des nach dem Herstellungsverfahren nach einem der Ansprüche 21 bis 24 hergestellten Gegenstands zur Herstellung eines laminierten oder geschichteten Gegenstands, gemäß dem dieser Gegenstand eine erste Schicht aufweist, auf der eine dekorative Schicht und gegebenenfalls zwischen der ersten Schicht und der dekorativen Schicht eine Zwischenschicht, vorzugsweise für den Komfort und/oder zur Wärme- oder Schallisolierung, fixiert wird.
